# EUROPEAN PATENT APPLICATION

(11) **EP 4 219 826 A1**
(43) Date of publication of application: **02.08.2023**
(21) Application number: 23153118.7
(22) Date of filing: 24.01.2023
(51) Int. Cl.: D21B 1/32

(54) **METHOD AND PLANT FOR THE RECOVERY OF POLYLAMINATED CARDBOARD, AND COMPOSITE MATERIAL OBTAINED THROUGH SUCH METHOD AND/OR PLANT**

(30) Priority: 26.01.2022 IT 202200001319
(71) Applicant: LUCART SPA, 55016 Porcari (LU) (IT)
(72) Inventor: Giordano, Maurizio, 55016 Porcari (Lucca) (IT)
(74) Representative: Pallini, Laura

(57) **Abstract**

A method for the recovery of polylaminated cardboards, including the steps of: introducing the polylaminated cardboards inside a pulper, comprising a first tank, as well as with water, so as to obtain the progressive impregnation of the cellulosic fibers that make up the cardboards, and their detachment from the polymeric plastic layers of the cardboards; emptying the contents of said pulper into a second tank, configured for metering a portion of water and cellulosic fibers to be used for the paper mill production process; removing the mixture of residual materials remaining in said second tank, said mixture comprising the polymeric and metal component, still partially covered with fibers, and water; shredding said mixture, in order to reduce the size of the solid materials contained therein, and in such a way as to allow the further subsequent recovery of the residual cellulosic fibers; conveying the mixture of broken up materials, coming from said shredding step, into a third tank, wherein any residues of other foreign materials are rejected by gravity; washing the mixture of broken up materials, in order to recover more cellulosic fibers, obtaining a composite material, in the form of a by-product; squeezing said composite material, until it contains a water residue of approximately 20-25%; prepare the composite material in the form of bales, suitable for supplying the material for subsequent uses.

## Description

### TECHNICAL FIELD OF THE INVENTION

The present invention concerns a method and a plant for the recovery of polylaminated cardboards.

The present invention also concerns a composite material obtained with the aforesaid method, or by means of the aforesaid plant.

### BACKGROUND ART

The use of polylaminated cardboards has been known for many years, particularly, but not exclusively, for the packaging of food products, mainly in liquid form (for example milk, fruit juices, and others).

Such cardboards usually have at least two components, or layers, made of different materials, i.e. usually at least one cellulosic and one polymeric component, to which a metal component (typically aluminum) is also very often added.

These components of the polylaminated cardboards are joined together in order to perform respective different functions, within the packaging, to obtain the optimal conservation of the product (for example hermetic seal, barrier, etc.).

A massive diffusion on the market of this type of packaging has already taken place for a long time; as a natural consequence, the problem of managing and disposing of the large quantities of waste produced quickly emerged.

For this reason, methods have been devised and perfected with the aim of recovering, as far as possible, the different materials that make up the aforementioned polylaminated cardboard, so that they can then be transformed into raw materials to be used for the creation of new products.

The aim of these solutions is, evidently, to minimize the production of waste and its consequent environmental impact.

The recovery methods of the different materials that make up the polylaminated cardboards, currently existing, are numerous, each with its own peculiarities and its own fields of application.

In more detail, many of these known methods are specifically conceived, and optimized, to obtain the recovery of a specific material (for example cellulosic fibers, polymers, etc.).

Consequently, the materials that make up the cardboards, but which are not actually and deliberately intended for recovery in the context of the aforementioned methods (for example, in some cases, the metal component, in others the polymeric component, and so on), can effectively constitute waste from these methods, which therefore will have to be managed in some way from the point of view of their disposal.

This therefore has a significant environmental impact, as well as an economic one, for the operator who deals with the recovery of at least one of the component materials, in order to obtain, from these, regenerated and usable raw materials.

### OBJECTS OF THE INVENTION

The technical aim of the present invention is to improve the state of the art in the field of recovering the materials which make up the polylaminated cardboards. Within such technical aim, an object of the present invention is to devise a method and a plant for the recovery of polylaminated cardboards which allows the aforementioned drawbacks to be overcome.

Another object of the present invention is to make available a method and a plant for the recovery of polylaminated cardboards which allows to obtain the effective recovery of all the main components of the aforementioned cardboard.

Another object of the present invention is to devise a method and a plant for the recovery of polylaminated cardboards which allows to generate, starting from the component materials of the cardboards, raw materials which can be effectively used for the manufacture of new products.

A further object of the present invention is to provide a method and a plant for the recovery of polylaminate cardboards of economic and versatile application.

This aim and these objects are all achieved by a method for recovering polylaminate cardboards according to the attached claim 1.

Furthermore, this aim and these objects are all achieved by a plant for recovering polylaminate cardboards according to the attached claim 11.

This aim and these objects are also achieved by the composite material according to claims 15-17.

The dependent claims refer to advantageous embodiments of the invention.

### EMBODIMENTS OF THE INVENTION

As a preliminary point, it should be noted that the method according to the present invention is particularly, but not exclusively, conceived to be implemented within the production process of a paper mill (which mainly deals with the production of "tissue" type paper, in addition to other types).

For this reason, the method according to the invention is mainly (but not exclusively) focused on the recovery and use of the cellulosic fibers, separating them right from their very first steps, so that they do not degrade, and recovering the aforementioned fibers before treating the remaining composite material.

The raw material, which undergoes the method according to the invention, is made up of post-consumer polylaminated cardboards, coming from differentiated collection, arranged in bales, as well as industrial production scraps.

In a first step of the method, the polylaminate cardboards are introduced into a pulper (preferably a high density pulper).

Furthermore, a step of adding water (recovered from the process) inside the pulper is provided, in a quantity equal to about 4-8 times the weight of the cellulosic fibers contained in the aforementioned polylaminate cardboards.

The pulper comprises a first steel tank, in which one or more rotating elements are present, in particular one or more impellers.

The impeller(s) is configured to keep the mass inside the pulper in constant motion. This motion, by means of the friction that is generated, allows the cellulosic support to be separated from the plastic/aluminum film.

At the same time, complete separation of the cellulosic fibers is achieved.

The method, therefore, provides for a step of activating the pulper (and therefore a step of rotating the aforementioned impeller/s), in order to obtain a progressive water impregnation of the cellulosic fibers that make up the polylaminated cardboards; this impregnation leads, precisely, progressively, to obtaining the detachment of the aforesaid fibers from the polymeric layers of the polylaminated cardboards.

This rotation step can have a duration of about 20 minutes.

At the end of the aforesaid step of rotation of the impeller, the method provides for emptying the pulper of the material contained therein.

This emptying step takes place in a facilitated way by the introduction of an abundant flow of water, which accentuates and further favors the detachment of the cellulosic fibers from the polymeric layers.

Following such step of emptying the pulper, a subsequent step is provided of transferring the material, by gravity, into a second tank, from which the material is dosed in a further filtration/washing step.

In particular, part of the water is dosed from the second tank, together with a major part of the cellulosic fibers, to be allocated to the paper mill production process. The method then comprises a step of removing the mixture of residual materials which remains inside the second tank.

In particular, this removal step comprises a suction step, by means such as a pump or the like.

This mixture of residual materials comprises, in particular, the polymeric and metal components, still partially covered with cellulosic fibers, and water.

At the end of this last step, the heavier coarse materials, possibly present, remain on the bottom of the second tank, which can therefore be easily discarded/disposed of.

At this point, the mixture of residual materials is sent to a buffer tank which makes it possible to make the flow towards the subsequent shredding step constant, so as to release the previous step, which is discontinuous, with respect to the subsequent, which instead must be made as much as possible at constant mass flow.

At this stage of the method, the aforementioned mixture of residual materials, removed from the second tank, comprises:
water, in an amount of 70-75% w/w;
plastic, in an amount of 12-16% w/w;
aluminum, in an amount of 2-4% w/w;
cellulosic fibers, in an amount of 5-7% w/w;
other materials, in an amount of 4% w/w.

The method provides for conveying this mixture of residual materials towards a shredding device.

The mixture is then shredded in said device, in order to reduce the size of the solid materials contained in the mixture, and in order to allow further subsequent recovery of the residual cellulosic fibers.

At the outlet of the shredding device, a mixture of broken up materials is obtained, which - in a further step of the method - are conveyed into a third tank.

In this last third tank, any residues of other foreign materials are discarded by gravity (for example parts of cans, PET bottles, rags, and others).

In a subsequent step of the method, the broken up material, purified of any such solid residues, is sent to a pressure washing device.

In this device, the broken up material is washed with the aim of recovering further cellulosic fibers, possibly still adhered to the broken up material.

At the outlet of the washing device, a composite material is obtained (in the form of a by-product) comprising plastic particles (rags) having a maximum size of between 15 and 150 mm, cellulosic fibers, in an amount of about 2% w/w, and water.

In particular, the aforesaid plastic rags comprise polyolefins, and more specifically polyethylene of various grades, polypropylene, other polyolefins, optionally together with aluminum.

The method then comprises a squeezing step of the above composite material, until it contains a water residue of about 20-25%.

Subsequently, a step is provided for preparing said composite material in the form of bales, so that it can possibly be supplied to third party users who can thicken or granulate it, for subsequent uses.

For example, the thickened or granulated material, optionally mixed with other materials, can be used in the molding of plastic materials, and in the production of articles of various kinds.

Alternatively, in an embodiment of the invention, the aforementioned composite material, in a subsequent operating step, can be transported to a further internal plastic material processing plant.

Within such internal plant, the method includes a step of removing the water from the composite material, using, in particular, a centrifuge.

Due to the mechanical effect, the centrifuge removes from the aforesaid composite material a large part of the water from the plastic component, which is known to be water-repellent.

Sheets are thus obtained which, in a subsequent step, are transported pneumatically, with air, towards a continuous extrusion device.

The conveying air can also be heated, in order to further dry the composite material up to a residual humidity of 8-12%.

Further water removal steps may be envisaged in the event that the steps described above fail to bring the residual humidity to the values already mentioned.

Following the extrusion step, and therefore at the outlet of the relative device, a plastic magma is obtained, which, without the addition of any further additive material, is subjected to a further filtration step to eliminate any unwanted residues. This filtration step can be carried out by means of screens provided with holes having different diameters, for example (but not exhaustively) from 0.75 mm to 3 mm.

At the end of the aforementioned filtration step, a final granulation step is envisaged, which transforms the filtered plastic magma into granules.

In particular, the granulation step is carried out without the addition of any other material or adjuvant.

The average composition of the final composite material thus obtained is as follows:
96.2% polyolefin filled with 9.5% aluminum;
2% cellulosic fibers;
1.7% PET and others.

The object of the present invention is also a plant for recovering polylaminated cardboards.

In particular, this recovery plant is configured to implement the method according to the invention, as previously described.

The recovery plant according to the invention comprises (connected in series to each other, i.e. from "upstream" to "downstream", with reference to the direction of flow of the treated material):
a high-density pulper, it comprises a first steel tank, in which there are one or more rotating elements, in particular one or more impellers; said impeller/s is configured to keep the mass inside the pulper in constant motion;
a second tank, arranged downstream of the first pulper tank, so as to collect the material contained therein, following its emptying, and to allow the dosing of part of the water together with a major part of the cellulosic fibers, to be destined to the paper mill production process;
removal means (e.g. suction means, such as a pump or the like), configured to remove the mixture of residual materials remaining in the second tank;
a buffer tank, configured to make the flow towards the subsequent shredding device constant;
a shredding device, arranged downstream of the second tank, configured to shred the aforesaid mixture of residual materials, so as to allow further subsequent recovery of the residual cellulosic fibers;
a third tank, arranged downstream of the shredding device, configured to reject, by gravity, any residues of other materials;
a pressure washing device, arranged downstream of the third tank, configured to wash the broken up material from the shredding device with the aim of recovering further cellulosic fibers, possibly still adhered to the broken up material, and so as to obtain a composite material (in the form of by-product) comprising particles (rags) of plastic with dimensions between 15 and 150 mm in width, cellulosic fibers (in an amount of about 2% w/w), and water;
a squeezing device, configured to remove water from said composite material until it has a residual water content of approximately 20-25%;
a device for preparing said composite material in the form of bales.

In an alternative embodiment of the plant, the latter may further comprise (downstream of the bale preparation device) an (internal) plastic material processing plant.

The plastic material processing plant includes, in turn:
a centrifuge, which has the purpose of further removing water from the composite material;
an air conveyor of the composite material, which can also be equipped with heating means of the material, to further dry it (up to a residual humidity of 8-12%);
any additional means of removing water;
a continuous extruder, fed by said air conveyor, which produces a plastic magma at the outlet;
a plastic magma filtration device (comprising sieves provided with holes having different diameters, for example, but not limited to, from 0.75 mm to 3 mm);
a granulating device, which transforms plastic magma into granules.

The object of the present invention is also a composite material, coming from the recovery of polylaminated cardboards, having the following average composition:
96.2% polyolefin filled with 9.5% aluminum;
2% cellulosic fibers;
1.7% PET and others.

This composite material, according to the invention, is supplied in the form of granules.

In one embodiment of the invention, the composite material is obtained with the previously described method and/or plant.

It has thus been seen how the invention achieves the proposed aims.

The method according to the invention, in both embodiments described, allows to recover effectively, and with high efficiency, all the materials of the different components of the polylaminated cardboards.

In fact, for the method according to the invention, only those materials, or fragments of materials, which are unsuitable to be incorporated in the final product, and/or unsuitable to be treated by the apparatuses and devices which carry out the method, and that make up the plant, are completely unusable.

Thanks to the fact that the method is implemented in the paper industry, the materials of the polylaminated cardboards are in fact managed and treated according to two main paths, namely:
the first path that concerns exclusively cellulosic fibers;
the second path that concerns the polymeric material, possibly combined with the metallic material (aluminum), which is often (but not always) present.

This distinction of the paths, followed by the different materials, allows to manage each of them in an optimal way, obtaining the maximum yield according to the future reuse to create new products, respectively in paper (for example of the "tissue" type), and in plastic (e.g. loaded plastic).

The present invention has been described according to preferred embodiments, but equivalent variants can be devised without departing from the scope of protection offered by the following claims.

## Claims

1. A method for the recovery of polylaminated cardboards, **characterised in that** it includes the following steps:
introducing the polylaminated cardboards inside a pulper, comprising a first tank provided with at least one impeller, as well as with water, and operating said at least one impeller of said pulper so as to obtain the progressive impregnation of the cellulosic fibers that make up the cardboards, and their detachment from the polymeric plastic layers of the cardboards;
emptying the contents of said pulper into a second tank, configured for dosing a portion of water and cellulosic fibers to be used for the paper mill production process;
removing the mixture of residual materials remaining in said second tank, said mixture comprising the polymeric and metal component, still partially covered with fibers, and water;
shredding said mixture, in order to reduce the size of the solid materials contained therein, and in such a way as to allow the further subsequent recovery of the residual cellulosic fibers;
conveying the mixture of broken up materials, coming from said shredding step, into a third tank, wherein any residues of other foreign materials are rejected by gravity;
washing the mixture of broken up materials, in order to recover more cellulosic fibers, obtaining a composite material, in the form of a by-product;
squeezing said composite material, until it contains a water residue of approximately 20-25%;
prepare the composite material in the form of bales, suitable for supplying the material for subsequent uses.

2. A method according to claim 1, wherein the water added into said pulper is in an amount equal to about 4-8 times the weight of the cellulosic fibers contained in the cardboards.

3. A method according to claim 2, comprising a step of rotating said impeller for a duration of about 20 minutes.

4. A method according to one of the preceding claims, wherein said mixture of residual materials, removed from said second tank, comprises:
water in an amount of 70-75% w/w;
plastic in an amount of 12-16% w/w;
aluminum in an amount of 2-4% w/w;
cellulosic fibers in an amount of 5-7% w/w;
other materials in an amount of 4% w/w.

5. A method according to one of the preceding claims, wherein said composite material comprises plastic particles having dimensions ranging from 15 to 150 mm in width, cellulosic fibers, in an amount of about 2% w/w, and water.

6. A method according to one of the preceding claims, comprising a step of removing the water from the composite material, by means of a centrifuge.

7. A method according to the preceding claim, comprising a step of transporting said composite material to an extrusion device, and of extruding a plastic magma.

8. A method according to the preceding claim, wherein said step of transporting said composite material is carried out by means of air, possibly heated so as to further dry up said material to a humidity residue of 8-12%.

9. A method according to claim 8 or 9, comprising a step of filtering said plastic magma, to eliminate any unwanted residues.

10. A method according to the preceding claim, comprising a step of granulating said plastic magma, so as to obtain a composite material having the following average composition:
96.2% polyolefins loaded with 9.5% aluminum;
2% cellulosic fibers;
1.7% PET, and others.

11. A plant for the recovery of polylaminated cardboards, comprising, with reference to the flow direction of the treated material:
a pulper comprising a first steel tank, provided with at least one impeller configured to keep in motion the mass comprising the polylaminated cardboards together with the water added thereto;
a second tank, arranged downstream of said first tank of said pulper, suitable for collecting the material coming from said first tank, following its emptying, and for allowing the dosing of a portion of the water together with a major part of the cellulosic fibers, to be used in the paper mill production process;
removal means for removing the mixture of residual materials remaining inside said second tank;
a shredding device, arranged downstream of said second tank, configured to reduce the size of the solid materials contained in said mixture, and to allow the further subsequent recovery of the residual cellulosic fibers;
a third tank, arranged downstream of said shredding device, configured to reject any residues of other materials by gravity;
a pressure washing device, arranged downstream of said third tank, configured to wash the material broken up by said shredding device for the purpose of recovering more cellulosic fibers, so as to obtain a composite material, in the form of a by-product;
a squeezing device, configured to remove water from the aforesaid composite material, down to a water residue of approximately 20-25%;
a device for preparing said composite material in the form of bales.

12. A plant according to claim 11, comprising a buffer tank, provided upstream of said shredding device, configured to make the flow towards the subsequent shredding device constant, so as to release the previous step, which is discontinuous, with respect to the subsequent, which instead must be made as much as possible at a constant a mass flow.

13. A plant according to claim 11 or 12, comprising a further plant for processing plastic material, provided downstream of said device for preparing bales.

14. A plant according to claim 13, wherein said plastic material processing plant comprises:
a centrifuge, configured to further remove water from said composite material;
an air conveyor of said composite material, which can also be provided with means for heating said material to further dry it, down to a humidity residue of 8-12%;
a continuous extruder, fed by said air conveyor, configured to produce a plastic magma at its outlet;
a device for filtering said plastic magma;
a granulation device, which processes said plastic magma into granules.

15. A composite material, obtained with the method according to claim 1, and/or through the plant according to claim 11.

16. A composite material, resulting from the recovery of polylaminated cardboards, **characterised in that** it has the following average composition:
96.2% polyolefins loaded with 9.5% aluminum;
2% cellulosic fibers;
1.7% PET, and others.

17. A composite material according to the preceding claim, supplied in the form of granules.
